# EUROPEAN PATENT APPLICATION

(11) **EP 0 813 316 A1**
(43) Date of publication of application: **17.12.1997**
(21) Application number: 97109285.3
(22) Date of filing: 09.06.1997
(51) Int. Cl.: H04B 7/26, H04J 3/06, H04Q 11/04

(54) **Method of establishing a spatially normalized communication path in a networked communications system**

(30) Priority: 10.06.1996 US 660778
(71) Applicant: MOTOROLA, INC., Schaumburg, IL 60196 (US)
(72) Inventor: Dellaverson, Louis P., Barrington, Illinois 60010 (US); Duch, Krzysztof, Hoffman Estates, Illinois 60195 (US)
(74) Representative: Gibson, Sarah Jane

(57) **Abstract**

A method of establishing a spatially normalized communications path between a mobile subscriber unit and a base station in a wireless communications network comprising a plurality of communication slots. The method comprises the steps of transmitting (12) a control packet message that comprises an identity of a dedicated one of the plurality of communication slots to the mobile subscriber unit via the wireless communication network, receiving (14) the control packet message at the mobile subscriber unit, transmitting (16) a request service message to the base station via the dedicated one of the plurality of communication slots, receiving (18) the request service message at the base station, determining (20) a time distance measurement based at least in part on the step of receiving the request service message, communicating (22) the time distance measurement to the mobile subscriber unit via the communication network, and using (26) the time distance measurement to cause the mobile subscriber unit to transmit a subscriber unit data packet message via the communications network at a predetermined time relative to the start of the dedicated one of the plurality of communication slots. In this manner a spatially normalized communication path between the base station and the mobile subscriber unit is established.

## Description

### Field of the Invention

This invention relates generally to networked communication systems and, more particularly, relates to a method of establishing a spatially normalized communication path between a subscriber unit and a base station in a networked communication system.

### Background of the Invention

Networked communication systems defined by a communication cell and comprising a base station and a plurality of subscriber units, wherein the positioning of the subscriber units relative to the base station may vary, are known in the art. An example of one such networked communication system is a wireless asychronous transfer mode (ATM) network. Currently, to allow the subscriber units to communicate with the base station, the base station provides each of the subscriber units with its own dedicated communication slot, selected from one of a plurality of communication slots which comprise a communication frame, in which the subscriber unit is to send communications to the base station. As the time for communications from each subscriber unit to reach the base station vary according to their spatial distance from the base station when the subscriber units are non-normalized relative thereto, measures must be taken to ensure that the individual communications sent by each of the plurality of the subscriber units do not collide with one another (i.e. communications from more than one subscriber unit arrive at the base station during the same communication slot). This is currently accomplished by providing each of the communication slots with a minimum slot size. In this manner, communications issued from a subscriber unit positioned spatially closer to the base station will not collide with communications issued from a subscriber unit positioned spatially further from the base station.

More specifically, the minimum size to afford the communication slot to ensure communications free from the collision problem above-described is currently determined by providing the communication slot with a time length of at least the time required to transmit a data packet plus a guard time comprised of a propagation delay time plus a radio turn around time plus a radio clock slip time. The propagation delay time is the time it takes for the transmit grant to travel from the base station to a subscriber unit located at the edge of the communication cell plus the time for the subscriber unit transmitted communication to start arriving back at the base station. The radio turn around time is the time required for the subscriber unit to switch from receive to transmit and vice versa and is typically on the order of 30 micro seconds. The radio clock slip time is used to compensate for the time the clocks in the subscriber unit and the base station drift between being reset and is typically on the order of 5 micro seconds.

By way of example, in a wireless ATM network, assuming a 8 kilometer communication cell and a 1 Mbps transmission rate, the propagation delay time would be 53 micro seconds. In a communication network in which the data packet size is 520 bits, the propagation delay time represents approximately 8.7% of the slot size. However, as the size of the communication cell or the rate of data transmission increases, the propagation delay time, and, accordingly, the guard time, will represent larger and more significant portions of the communication slots. Therefore, it is seen that the propagation delay time sets a practical limit to the size of the communication cell. Furthermore, as the propagation delay time increases, the overall data communication efficiency of the communication network is accordingly diminished. In addition, as the number of communication slots which may fit within the frame is determined by the size which must be afforded to each of the communication slots, the requirement to include the propagation delay time in determining the size of the communication slots accordingly decreases the number of communication slots available.

As such, there currently exists a need for a method of establishing a communication path between a subscriber unit and a base station in a networked communication system that is free from the cell size and efficiency limitations above-described.

### Brief Description of the Drawings

FIG. 1 is a flow diagram illustrating the steps executed to establish spatial normalization between a subscriber unit and a base station, in accordance with the present invention.

FIG. 2 is a flow diagram illustrating the steps executed to adjust the spatial normalization between the subscriber unit and the base station, in accordance with the present invention.

### Detailed Description of a Preferred Embodiment

In accordance with a preferred embodiment of the present invention, the method establishes a spatially normalized communication path between a subscriber unit and a base station in a communication network which is comprised of a plurality of communication slots of which one is an access slot. More specifically, the base station transmits a control packet message, which includes an identity of the access slot, to the subscriber unit whereafter the subscriber unit will transmit a request service message to the base station via the access slot. Once the request service message is received at the base station, the base station determines a time distance measurement which is based at least in part on the receipt of the request service message. This time distance measurement is then communicated to the subscriber unit for use thereby. In particular, the subscriber unit will use the time distance measurement to cause the subscriber unit to transmit data packet messages via the communications network at a predetermined time relative to the start of a communication slot which has been dedicated to the subscriber unit for use during transmissions. In this manner, the method establishes a spatially normalized communication path between the base station and the subscriber unit, whereby the subscriber unit appears to the base station as being positioned approximately adjacent thereto regardless of the true location of the subscriber unit within the communication cell. Accordingly, the method has the advantage of eliminating the need to utilize the propagation delay time when calculating the minimum size of the communication slot, resulting in fewer cell size limitations and the efficiency problems associated with the prior art.

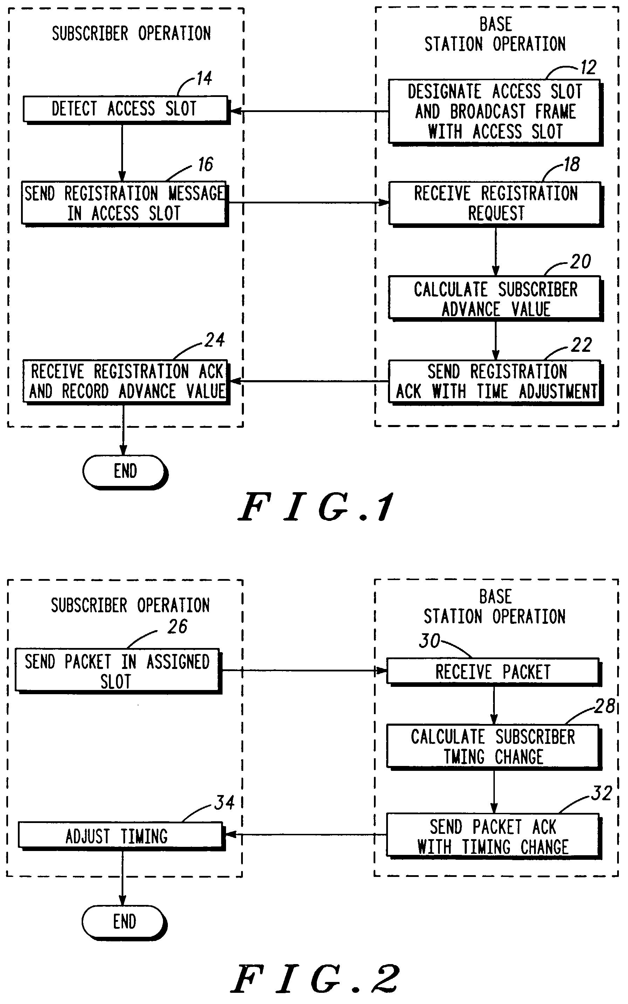

Referring now to FIG. 1 and FIG. 2, the method of establishing and adjusting a spatially normalized communication path between a subscriber unit and a base station residing in a communication network is described. In a preferred embodiment, the communication network comprises a wireless ATM network. As is known, ATM is a networking and transmission technology that enables such diverse traffic types as voice, data, and video to efficiently share a common transmission path. All data in ATM is handled in containers that carry a fixed number of bits. These containers are called "ATM cells".

To provide access to the communication network to non-normalized subscriber units, the base station first designates one slot in the frame of communication slots as an access slot. The base station then broadcasts (12) a control packet message via the communication network, which control packet comprises the identity of the access slot that the base station is making available to the subscriber unit. The access slot is typically at least the same size as the remaining communication slots, but its use is initially restricted to a specific set of messages used by the subscriber unit to request service and to achieve normalization.

Once the control packet message has been issued by the base station, it is received (14) at the subscriber unit whereupon the subscriber unit normalizes its internal clock and awaits the start of the access slot. The subscriber unit then sends (16) a registration or request service message to the base station via the access slot indicating that the subscriber unit wishes to establish a communication path with the base station via the communication network. The base station, in turn, receives (18) the request service message and uses the receipt thereof to calculate (20) a time distance measurement or subscriber advance. More specifically, the base station compares the time of receipt of the request service message with an expected time of receipt of the request service message to determine how much earlier or later the subscriber unit should start transmissions in order that any subsequent transmissions issued by the subscriber unit will arrive at the base station at approximately the start of the dedicated communication slot assigned thereto.

Once the time distance measurement has been calculated by the base station, the base station then sends (22) the time distance measurement and an acknowledgement of the receipt of the request service message to the subscriber unit. More specifically, the base station utilizes one of the plurality of communication slots to transmit to the subscriber unit a base station data packet message that includes the time distance measurement. The base station data packet will also include any acknowledgements and/or data transmissions as dictated by the circumstances, for example, data transmissions from another subscriber unit which is communicating with the subject subscriber unit. The time distance measurement is thereafter received and recorded (24) by the subscriber unit for use in subsequent transmissions to the base station.

Specifically, once the subscriber unit has registered with the base station, the subscriber unit will use (26) the time distance measurement to cause the start of the transmission of the subscriber unit data packet messages to be adjusted by a predetermined time relative to the start of the dedicated communication slot. When the subscriber unit registers with the base station, the subscriber unit receives from the base station a dedicated one of the plurality of communication slots for use in transmitting subscriber unit data packet messages thereto. The dedicated one of the plurality of communication slots may be the access slot. In this manner, the base station will receive the subscriber unit data packet messages at approximately the start of the dedicated communication slot thereby creating a rough degree of spatial normalization between the subscriber unit and the base station.

As it is contemplated that the subscriber unit will continue to move within the communications cell, it is preferred that the time distance measurement be continuously modified (28) whenever the base station receives (30) a subscriber unit data packet message. This updated time distance measurement may then be transmitted (32) to the subscriber unit in conjunction with a base station data packet message. The subscriber unit will thereafter adjust (34) its stored time distance measurement for use in future transmissions. More specifically, the time distance measurement may be a bit field prepended to the base station data packet message, which bit field is read by the subscriber unit and thereafter used by the subscriber unit to adjust the start of transmission earlier or later by, for example, a predetermined number of bit time (the time needed to transmit one bit of data).

To further enhance the advantages associated with reducing the guard time needed to establish the minimum size to provide to the communication slot (resulting from the above described elimination of the need to provide for propagation delay time), it is further desirable to ensure that the communication slot utilized by the base station and that utilized by the subscriber unit are spaced by a predetermined amount of time. In this manner, the need for providing radio turn around time when calculating the guard time to be included in the size of the communication slot may also be eliminated. Specifically, as discussed in the "Background of the Invention", the radio turn around time is the time required for the subscriber unit to switch from transmission to reception or vice versa. Therefore, by ensuring that the subscriber unit will not be required to transmit and receive in back to back communication slots, the need to provide for radio turn around time in the guard time may also be eliminated. It will be understood that, should the communication slots have a size smaller than the radio turn around time, the number of slots between which the subscriber unit is to transmit and receive will have to be accordingly increased. In this manner, the minimum size to be provided to the communication slot will be substantially equal to the time required to transmit data packets thereby further improving data transmission efficiency while preventing data transmission collisions.

## Claims

1. A method of establishing a spatially normalized communication path between a subscriber unit and a base station in a communication network comprising a plurality of communication slots, the method characterized by the steps of:
transmitting a control packet message that comprises an identity of a first one of the plurality of communication slots to the subscriber unit;
receiving the control packet message at the subscriber unit;
transmitting a request service message to the base station via the first one of the plurality of communication slots;
receiving the request service message at the base station;
determining a time distance measurement based at least in part on the step of receiving the request service message;
communicating the time distance measurement to the subscriber unit; and
using the time distance measurement to cause the subscriber unit to transmit a subscriber unit data packet message via the communications network at a predetermined time relative to the start of a first one of the plurality of communication slot to establish a spatially normalized communication path between the base station and the subscriber unit.

2. The method as recited in claim 1, further comprising the steps of receiving the subscriber unit data packet message at the base station, modifying the time distance measurement based at least in part upon the step of receiving the subscriber unit data packet message, and repeating the steps of communicating the time distance measurement and using the time distance measurement.

3. The method as recited in claim 1, wherein the step of transmitting a control packet message further comprises the step of causing the base station to transmit the control packet message via a second one of the plurality of communication slots.

4. The method as recited in claim 1, wherein the step of communicating the time distance measurement is performed via a second one of the plurality of communication slots.

5. The method as recited in claim 4, wherein the step of communicating the time distance measurement further comprises the step of transmitting a base station data packet message to the subscriber unit via the second one of the plurality of communication slots.

6. The method as recited in claim 5, wherein the time distance measurement is prepended to the base station data packet message.

7. The method as recited in claim 1, wherein the first one of the plurality of communication slots is an access slot.

8. The method as recited in claim 1, wherein the communication network is an ATM communication network and the data packet message is an ATM cell.

9. A method of establishing a spatially normalized communication path with a subscriber unit in a base station of a communication network comprising a plurality of communication slots including an access slot, the method characterized by the steps of:
transmitting a control packet message that comprises an identity of the access slot via the communications network;
receiving a request service message from the subscriber unit via the access slot;
determining a time distance measurement based at least in part on the step of receiving the request service message; and
communicating the time distance measurement to the subscriber unit via the communication network.

10. The method as recited in claim 13, further comprising the steps of receiving a subscriber unit data packet message via the communication network; modifying the time distance measurement based at least in part on the step of receiving a subscriber unit data packet message; and repeating the step of communicating the time distance measurement.
